# EUROPEAN PATENT APPLICATION

(11) **EP 2 662 503 A2**
(43) Date of publication of application: **13.11.2013**
(21) Application number: 13167276.8
(22) Date of filing: 10.05.2013
(51) Int. Cl.: E04B 1/76

(54) **Fixing for affixing a load to a structure**

(30) Priority: 09.05.2012 GB 201208229
(71) Applicant: Rube, Edmond, Dover, Kent CT15 5ER (GB); Mallion, Paul, Canterbury, Kent CT1 2NZ (GB)
(72) Inventor: Rube, Edmond, Dover, Kent CT15 5ER (GB); Mallion, Paul, Canterbury, Kent CT1 2NZ (GB)
(74) Representative: Bridle, Andrew Barry

(57) **Abstract**

The invention provides fixing for affixing a load to a structure, comprising: a hollow body capable of being fixed to a load bearing substrate of a structure by a first fixing element so that a first end of the hollow body is proximate the substrate, the hollow body having an open second end opposite to the first end; and a plug for engagement with the second end of the hollow body and retainable in the second end of the hollow body by a retaining means, the plug having a first hole whereby a load is affixable to the plug by a second fixing element secured within the first hole; characterised in that the hollow body includes therewithin an insulation material and/or the plug includes a second hole spaced from the first hole through which an insulation material may be injected.

## Description

### FIELD OF THE INVENTION

The present invention relates to a fixing. The fixing is particularly suitable for affixing a load to the surface of a wall or other load bearing substrate to which an external layer of insulating material or cladding has been applied.

### BACKGROUND TO THE PRESENT INVENTION

Energy efficient buildings often use external insulation attached to the surface of a wall to reduce or eliminate heat loss from a building. Suitable materials for such purposes include: mineral wool, wood fibre, expanded or extruded polystyrene, polyurethane or cork, some or all of which may be in the form of boards or panels. This layer of insulation can be finished with a coating, render, plaster or a cladding system. The arrangement of a load bearing substrate (e.g. wall) having applied thereto an insulation layer and an outer, finishing layer is referred to as a structure in the context of the present invention.

In order to affix objects, particularly ones of a significant load such as satellite dishes, hanging baskets, external security lights, balustrades, awnings, security alarm components and letter boxes, to the exterior face of a building insulated in this manner, a fixing should extend through the insulation and be secured to the load bearing substrate to provide sufficient support for the load.

A first known fixing for affixing such objects to externally insulated walls consists of an externally threaded fixing, resembling a known type of plasterboard plug, made of impact resistant nylon whose spiral thread taps itself through the outer plaster and into the insulation board. The fixing has a central, blind, threaded hole for receiving a screw to attach an object to the wall. The fixing engages only with the insulating layer and not with the load bearing substrate and is therefore only suitable for supporting objects of low weight.

A second known fixing consists of a metal screw having a narrow elongate shank of 6 to 8mm with a self-tapping cone tip which cuts its own way through the plaster and insulation and into the substrate and an 'anti-cold cone' of insulating material at the opposite end from the tip which is embedded in the plaster and insulation until flush with the plaster surface. An end cap having a central hole is placed over the end of the anti-cold cone and a screw is advanced through the hole in the cap and into the anti-cold cone to attach an object to the wall. The anti-cold cone offers some thermal insulation between the embedded metallic screw and the fixing for the object to be attached to the wall.

A third known fixing consists of a screw having an elongate shank of 10 to 12mm which can be cut to the required length. A hole is drilled through the plaster, insulation and into the substrate and the cut end of the fixing is inserted into a plug and advanced into the hole. A clearance hole is drilled on the outer face of the insulation to allow an anti-cold cone at the opposite end from the tip to be embedded in the plaster and insulation until flush with the plaster surface. A screw is advanced into the anti-cold cone to attach an object to the wall. The anti-cold cone provides a thermal barrier between the embedded fixing and the fixing for the object to be attached to the wall in order to reduce heat loss.

These known fixings are not optimised to minimise heat losses and the narrow elongated shank is prone to bending when used to support heavier loads. As the external insulation thickness is increased, the required length of the fixing also increases, allowing greater flex in the shank of the fixing. This results in instability of the attached object and greater stress on the insulation which is sandwiched between the wall and the fixing. Flexing in the component can cause damage to the surface finish of the wall, weaken the fixing, and create a gap around the shank, causing increased heat loss and potentially water ingress.

The inventors have appreciated that there is a need for an improved fixing that is particularly suitable for securely and effective affixing objects, including those of appreciable load to an externally insulated structure while minimising heat loss and maintaining the thermal efficiency of the external insulation.

### SUMMARY OF THE INVENTION

The invention provides:. a fixing for affixing a load to a structure, comprising: a hollow body capable of being fixed to a load bearing substrate of a structure by a first fixing element so that in use a first end of the hollow body is proximate the substrate, the hollow body having an open second end opposite to the first end; and a plug for engagement with the second end of the hollow body and retainable in the second end of the hollow body by a retaining means, the plug having a first hole whereby a load is affixable to the plug by a second fixing element secured within the first hole; **characterised in that** the hollow body includes therewithin an insulation material and/or the plug includes a second hole spaced from the first hole through which an insulation material may be injected.

The first and second fixing elements may be conventional fixings and need not form part of the invention.

The term "hollow body" is used to define a generally tubular body having any cross-sectional shape. Preferably the hollow body is a generally elongate tube. More preferably it is a tube of circular section or a hollow cylindrical member. The hollow body may be formed from a corrugated material or it may be at least partially corrugated with the corrugations extending longitudinally, i.e. from the first end to the second end of the body. Such an arrangement increases the load bearing ability of the fixing. Additionally or alternatively, the hollow body may include a plurality of longitudinal reinforcing ribs. The ribs have the same strengthening effect as the corrugations. The ribs may be located on the outwardly facing surface of the hollow body and/or on the inwardly facing surface of the body.

Where the hollow body may be used in conjunction with an uneven substrate, it may include a base plate which has protrusions that are adjustable in length to provide a base which allows for the unevenness of the substrate surface.

The term "plug" is used to define a body which is engagable with the open second end of the hollow body. The plug may be an end cap or insert which can be used to occlude, cover, plug or block the second end of the hollow body to provide a point of attachment for a load.

The term "retaining means" is used to define a means for retaining the plug within the end of the hollow body. This may be a press fit or interference fit between the plug and the hollow body. Additionally or alternatively, it may be a defined component of the plug and/or hollow body, for example an adhesive, corresponding screw thread, grub screw or retaining pin arrangement. Other suitable retaining means will be apparent to the person skilled in the art.

The fixing of the invention provides a more stable and secure anchor than known fixings for affixing objects of any load to externally insulated structures, while preventing thermal bridging and optimising the thermal integrity of the insulation.

The dimensions of the fixing can be selected to suit the particular load to be supported. A hollow body having a greater width or diameter will spread the supported load over a greater area of the supporting structure, and allow multiple fixing elements to be used to attach a load to the end cap, and thereby allow a heavier load to be affixed to the supporting structure. Thus, reference to the "first hole" of the plug includes multiple first holes to be provided through the plug. The hollow body also reduces or eliminates bending of the fixing so as to provide a more stable anchor and further reduce heat loss compared to known fixings.

Fixings having a larger diameter or dimension transverse to the longitudinal axis may permit the use of multiple fixing elements to attach the fixing to the substrate providing additional support for the load. Thus, reference to "a fixing hole" includes multiple fixing holes formed in the first end.

Suitably, the hollow body is substantially closed at its first end or at a point between the first and second ends, the substantially closed portion having a fixing hole for attachment of the hollow body to the load bearing substrate in use by a first fixing element secured within the fixing hole in the substantially closed portion.

In an embodiment of the invention, the longitudinal axis of the fixing hole in the substantially closed portion of the hollow body is substantially parallel to the longitudinal axis of the hollow body.

In a further embodiment, the hollow body is insertable into a blind hole in the surface of the structure and affixable by a first fixing element to a load bearing substrate at the blind end of the hole. This enables the hollow body to be embedded within the insulation layer and the outer layer of the structure for additional support and resistance to bending to provide a more stable and robust attachment for the load.

Optionally, the plug has a shank portion insertable into the second end of the hollow body and the shank portion is retainable in the second end of the hollow body by the retaining means. This provides a greater area contact between the plug and the hollow body which more effectively transmits the load to the load bearing substrate.

In view of the preceding paragraph, the outer surface of the shank portion may be correspondingly shaped with the inner surface of the hollow body. This may help to locate the plug in the radial direction and maximises the area of contact between the plug and the hollow body to provide a more robust attachment for the load.

In an embodiment of the invention, the plug includes a flange projecting from the shank portion. This limits the travel of the shank of the plug into the second end of the hollow body and locates the plug in the axial direction. In addition, the flange may be dimensioned so that in use of the fixing, the flange is engageable with the exterior (i.e. outer) surface of the structure surrounding the hollow body. This provides an additional area of contact between the fixing and the structure to provide more robust support for the load.

In a further embodiment of the invention, the plug of the fixing includes a sealing element located in use between the flange and the exterior surface of the structure. Suitably, the sealing element is a malleable sealing ring. This may be compressed between the flange and the outer surface of the structure. The seal may help to prevent water ingress and reduce heat loss through the hole for the fixing.

Suitably, at least a portion of the internal part of the hollow body is adapted to be filled with an insulating material. This helps to minimise or eliminate heat loss through the fixing. For example, at least a portion of the internal part of the hollow body may be adapted to be filled with expanding foam. This allows the hollow body to be quickly and effectively filled with insulating material. Furthermore, the expanding foam may have an adhesive effect which may result in a stronger coupling between the plug and the hollow body.

The hollow body may have at least one hole through its sidewall. In use of the fixing, the at least one hole through its sidewall permits the passage of insulating material from the internal part of the hollow body through the sidewall into a cavity between the hole in the structure and the external surface of the sidewall of the hollow body. This further reduces heat loss through the hole for the fixing by filling the cavity around the fixing with insulating material, and provides additional stability between the fixing and surrounding material. Expanding foam is particularly suitable as it will tend to expand through the at least one hole in the sidewall to fill the surrounding cavity.

As noted above, the plug has a further hole (the second hole) which is offset from the hole for attachment of a load (the first hole) to permit the injection of an insulating material into the internal part of the hollow body. This avoids the need to use the first hole for injecting the insulating material which may become blocked or occluded by the insulating material, making it difficult to attach the load to the fixing. Extending through or from the second hole into the cavity within the hollow tube may be a conduit, such as a tube. The conduit guides the injected insulation material into the cavity, which helps to provide an even and complete fill of the cavity and minimises the risk of voids being formed within the cavity.

In an embodiment of the invention, the retaining means for retaining the plug relative to the hollow body is an adhesive. Additionally or alternatively the retaining means may be a thread on the plug which is engageable with a corresponding thread on the inside surface of the hollow body. In the embodiment in which the retaining means includes a threaded coupling, this may comprise a left-hand thread. This allows the plug to be secured to the hollow body without loosening the first fixing element which affixes the hollow body to the substrate of the structure.

On the basis that the fixing will be located within a structure, for example a building, it would be advantageous if the fixing conformed to normal building requirements. One of these requirements includes the fixing to be able to withstand a determined period of time under the conditions of a building fire. Thus, the hollow body and/or the plug of the invention may include a fire retardant and/or fire resistant material. The fire retardant and/or fire resistant material may be in the form of a coating, for example an intumescent coating and/or a coating formed from heat insulating fibres. Additionally or alternatively, the material from which the hollow body and/or the plug are formed may include additives that provide the fixing with desired fire retardant/fire resistant properties. The fixing may conform to the 1 hour fire test requirements required under UK building regulations. Thus, it may include fire resistant materials which allow it to survive one hour in a fire as set out in the standard fire safety requirements of the UK.

As noted above, the hollow body may be a circular section hollow tube. This maximises the area of contact between the fixing and a drilled hole in the structure to provide a more stable point of attachment for the load and minimises the size of the cavity around the fixing to be filled with insulating material passing through the sidewall. In such an embodiment, the shank portion of the plug is a circular section cylindrical shank portion. This ensures that the shank corresponds with the preferred shape of the hollow body to maximise the area of contact between the plug and the hollow body. Suitably, the plug is threaded for engagement with the hollow body to provide a secure fit. Alternatively, the shank portion of the plug may have a press fit or interference fit with the hollow body.

The invention also provides a kit for affixing a load to a structure, the kit comprising: a fixing as described or defined anywhere herein; a sealing element; and one or more fixing elements for affixing the hollow body to a structure and/or for affixing a load to the plug.

The invention further provides a method of affixing a load to a structure including the steps of: drilling or boring a blind hole into a structure; inserting a hollow body into the blind hole until a first end of the hollow body is adjacent to a load bearing substrate of the structure; affixing the first end of the hollow body to the substrate by a first fixing element; inserting a plug having a shank portion into an open second end of the hollow body, the plug having a first hole and a second hole; retaining the plug portion into the second end of the hollow body with a retaining means; and affixing a load to the plug by a second fixing element secured within the first hole.

In an embodiment of this aspect of the invention, the plug includes a flange projecting radially from a distal end thereof and the method includes the step of inserting a sealing element between the flange and the outer surface of the structure.

In a further embodiment of the invention according to this aspect, the method also includes the step of injecting an insulating material into an internal portion of the hollow body via the second hole in the plug.

Some benefits of the fixing of the present invention compared to known fixings include:
- Heat loss through the components is reduced compared to known ferrous metal and other fixings;
- Improved resistance to bending moment applied by the supported load;
- Fixing spreads load to surrounding surface to improve stability;
- Suitable for all external insulation and substrate materials and thicknesses;
- Diameter of hollow cylindrical member of the fixing is selectable to suit load and stability requirements for a particular object to be supported;
- Fixing can be used with any insulation depth, by cutting a standard length hollow cylindrical member to required length;

The plug portion of the fixing allows certain types of removable fixing elements used to attach objects to the plug portion to be removed and re-secured without damage to the fixing. This allows removal and replacement of the supported load or removal and refitting of an existing load.

### BRIEF DESCRIPTION OF THE DRAWINGS

The invention will now be further described, by way of example only, with reference to the accompanying figures, in which:
Figure 1 is a longitudinal section through a fixing according to the present invention showing the hollow cylindrical member and plug portion in exploded form;
Figure 2 is a side view of the fixing of the present invention showing the ends of the hollow cylindrical member in third angle projection;
Figure 3 is a perspective exploded view of the fixing of the present invention;
Figure 4 is a section through the fixing of the present invention in an installed configuration in which the hollow cylindrical member has been filled with insulating material.

### DETAILED DESCRIPTION OF PREFERRED EMBODIMENTS

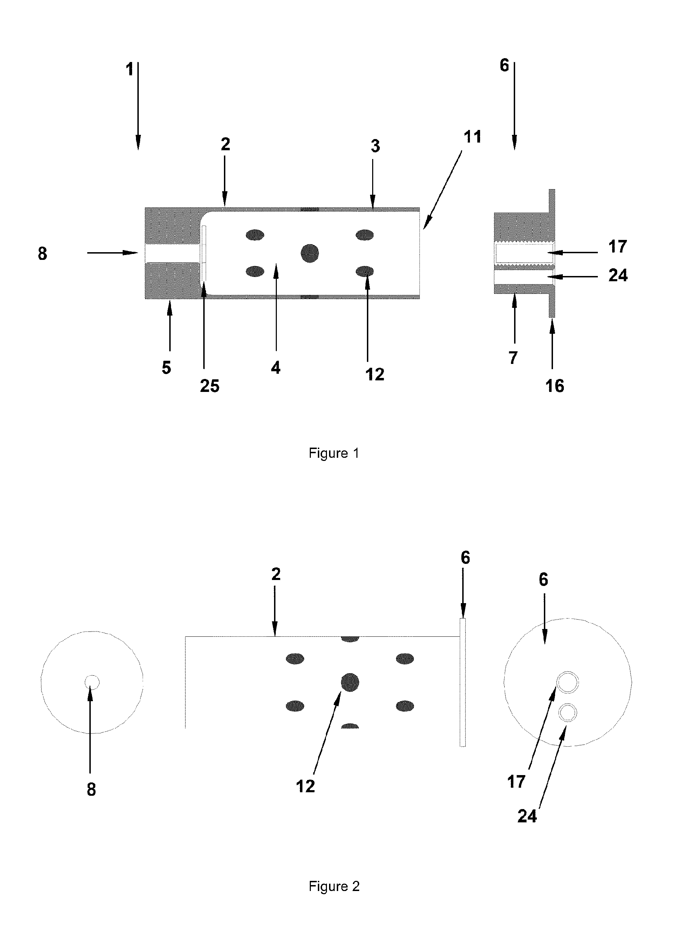

With reference to Figures 1 to 4, a fixing 1 is provided as a tubular two-part anchor designed to allow secure fixing of objects to the outer surface of an externally insulated structure such as the externally insulated wall of a building.

As shown in Figures 1 to 3, the fixing 1 includes a hollow tubular body 2 shown as a tube of circular section having a sidewall 3 defining an internal cavity 4. Preferably, the sidewall is thicker in a first end region 5 of the hollow tubular body (Figure 1).

The fixing also includes an end cap or plug 6 having a cylindrical shank portion 7 of a shape complementary with that of the hollow tubular body 2.

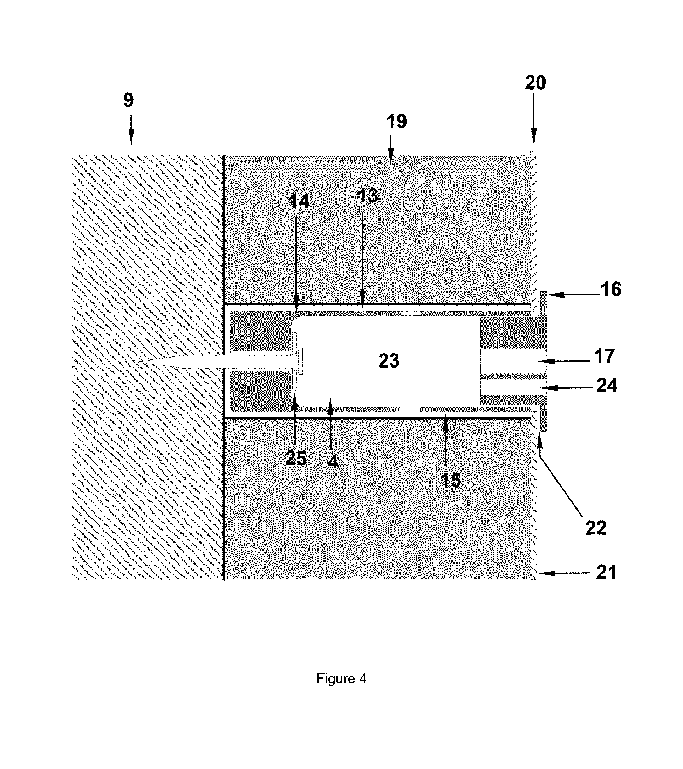

The hollow tubular body 2 is substantially closed at a first end region 5 and a central fixing hole 8 is provided (or multiple fixing holes 8 could be provided in the case of larger diameter units) through the first end region 5 for affixing the hollow tubular body to a load bearing substrate 9 (Figure 4) by a first fixing element 10. The first fixing element 10 may be a conventional fixing such as a screw. The longitudinal axis of the central fixing hole 8 is substantially parallel to the longitudinal axis of the hollow tubular body 2. The second end 11 of the hollow tubular body, opposite the first end, is substantially open to receive the cylindrical shank portion 7 of the plug 6.

As discussed below, one or more holes 12 are provided through the sidewall of the hollow tubular body 2 to permit the passage of an insulating material from the internal cavity 4 through the sidewall into a cavity 13 (Figure 4) defined between the external surface 14 of the sidewall and the inwardly facing surface of the insulating material of the structure which defines a hole 15 in the structure.

The plug 6 has a radially extending flange 16 projecting from the cylindrical shank portion 7. The flange 16 is dimensioned to project at least partially across the thickness of the sidewall of the hollow tubular body 2 so as to limit the travel of the plug 6 into the second end region 11 of the hollow tubular body 2. In the embodiment shown in the drawings, the diameter of the flange 16 is greater that the diameter of the hollow tubular body 2.

A means for retaining the plug 6 within the second end of the hollow tubular body 2 is provided. In the embodiment shown in the drawings, the retaining means is a press or interference fit of the plug 6 within the hollow body 2 and is supplemented with an adhesive material located between the plug 6 and the hollow body 2. Alternatively, the retaining means may be a thread (not shown), preferably a counter-clockwise or left-handed thread, on the cylindrical shank 7 of the plug 6 and a corresponding thread on the inside surface of the second end region 11 of the hollow tubular body 2 so that the plug 6 may be screwed into and retained within the second end of the hollow tubular body 2. The retaining means may alternatively be a pin on one of the plug portion or hollow tubular body for engagement with a corresponding slot, channel or recess in the other. Other suitable retaining means will also be apparent to those skilled in the art.

The plug 6 defines a threaded central (first) hole 17 which may be a through or blind hole. This is shown as a through hole in the drawings. Alternatively, there may be a through or blind hole in the plug 6 in which a threaded insert is positioned. A suitable threaded insert may be made from brass or stainless steel. The longitudinal axis of the hole 17 is parallel to the longitudinal axis of the cylindrical shank 7 of the plug 6. When the plug 6 is fitted into the second end of the hollow tubular body 2, the longitudinal axis of the hole 17 in the plug is also parallel to the longitudinal axis of the hollow tubular body 2 and also coaxially aligned with the fixing hole 8 through the first end of the hollow tubular body 2.

The first hole 17 in the plug portion 6 enables a load such as a security light, satellite dish, alarm, balustrade or other object to be affixed by a second fixing element 18 to the plug. The second fixing element 18 may be a conventional fixing such as a screw. The load applied by an object (not shown) affixed to the plug 6 by the second fixing element 18 is therefore transmitted through the plug 6, hollow tubular body 2 and first fixing element 10 to the load bearing substrate 9 to provide a stable and secure fixing for the object. The hollow tubular body ensures that the load is spread over a greater area of the supporting surface compared to the elongate shank of the known fixings.

The plug 6 defines a second hole 24 which is spaced from the first hole 17. The second hole 24 provides access to the interior cavity 4 of the hollow tube 2 when the plug 6 closes the second end of the hollow tube 2.

One example fixing has the following dimensions: the hollow tubular body 2 has a length of 150mm, a diameter of 50mm and a thickness of 2.2mm. The plug 6 has a cylindrical shank 7 length of 30mm and a flange 16 width of 10mm, the overall diameter of the plug flange measuring 70mm. The hollow tubular body 2 has a centrally positioned 10mm fixing hole 8 for receiving a first M8 fixing to suit the particular substrate 9. The plug 6 has a centrally positioned first hole 17 measuring 10mm for receiving a second M10 fixing for affixing to a load. The hollow tubular body 2 and plug 6 are made from a reinforced polymeric material. A malleable sealing ring 22, made from EPDM rubber, is also provided and in use is located between the flange 16 and the outer layer of the structure. The hollow tubular body 2 and/or the plug 6 may alternatively be made from other materials, for example, rigid plastics, composite materials, resins or other low conductivity materials for reducing heat loss through the insulation.

The fixing described above may be affixed to a load bearing wall of a building which carries thereon a layer of insulation material and an outer finish layer so that the first end 5 of the hollow tubular body 2 is located adjacent to the load bearing substrate 9 and the second end projects preferably substantially horizontally from the surface. Alternatively, the hollow tubular body could be attached to a substrate and the external insulation formed around it. For example, the first end of the hollow tubular body could be affixed to the substrate prior to the application of insulation and then the external insulation applied around the hollow tubular body so that it is supported by the surrounding insulation and so that the second end of the hollow tubular body is flush with, shy of, or proud of, the outer surface of the insulation or outer finish layer.

As discussed above, the fixing 1 is particularly suitable for a supporting structure which consists of a substrate 9, such as a wall made of bricks or other known building materials, which has already been covered by an externally applied layer of insulation 19, such as rigid foamed polyurethane or high density polystyrene, woodfibre or cork, further covered by a finish layer of plaster or render 20. In this case, the fixing 1 is preferably embedded in a hole formed in the insulating layer so that the first end of the hollow tubular body 2 is affixed to and bears against the substrate 9 to provide a stable anchoring point and so that the wall of the hollow tubular body 2 is supported by the surrounding insulation or a by an insulating material placed between the wall of the fixing and the hole in the external insulation. A method of installing the fixing 1 of the present invention in a blind hole in the insulating layer will now be described.

A hole 15 is drilled or bored through the plaster layer 20 and the insulating layer 19 to form a blind hole. The blind hole ends at the load bearing substrate 9. The hollow tubular body 2, which can be cut to length if necessary to match the depth of the hole, is then inserted into the hole 15 and anchored to the substrate 9 by the first fixing 10 inserted through the fixing hole 8 in the first end 5 of the hollow tubular body 2 and into the substrate 9 with an appropriate tool. Preferably, the dimensions of the blind hole 15 are such that when installed, the second end 11 of the hollow tubular body is substantially flush with, or just shy of, the outer surface 21 of the structure 9.

The plug 6 is then fitted so that the cylindrical shank portion 7 is inserted into the second end region 11 of the hollow tubular body 2. The plug 6 is bonded into the end of the hollow tubular body 2 with an adhesive. Alternatively, the plug portion may be screwed into the second end of the body when a thread is provided. If the cylindrical shank portion of the plug and the second end portion of the hollow tubular body have a complementary left-hand thread, the plug portion can be tightened without loosening the first end of the hollow tubular body anchored to the substrate.

When installed and retained within the hollow tubular body, the plug may be flush with or project from the outer surface 21 of the structure. Preferably, the depth of the flange 16 projecting from the shank portion of the plug and the lateral position of the flange relative to the cylindrical shank 7 of the plug 6 are dimensioned so that the flange butts up against the outer surface of the structure and covers any rough edges around the blind hole.

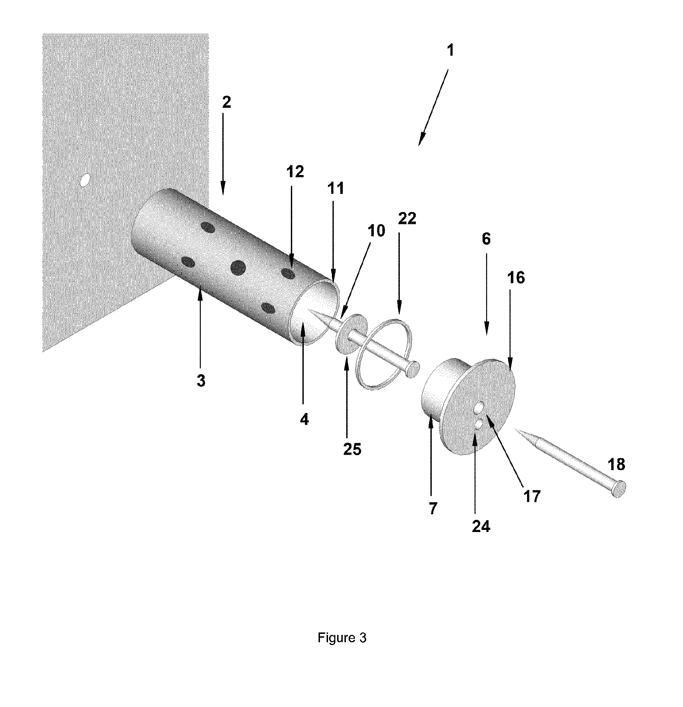

As shown in Figure 3 and 4, during installation, the malleable sealing ring 22 is positioned over the cylindrical shank 7 of the plug 6 so that when the plug 6 is retained within the hollow tubular body 2, the sealing ring 22 abuts the outer surface 21 of the structure and the inside surface of the flange 7 projecting from the plug to provide an improved seal and help to minimise water ingress. It will be apparent that alternative seals may be provided, which include a bead of silicone on the inside surface of the flange or a gasket or sealing ring made from cork or other suitable material. Suitably, the plug will be retained within the hollow tubular body so that the seal is compressed between the inside surface of the flange 7 and the outer surface of the supporting structure (Figure 4).

A load (not shown) may then be affixed to the plug 6 by the second fixing element 18, for example a conventional screw, through the threaded hole 17 in the plug 6.

To reduce heat loss through the fixing, an insulating material 23 is injected into the internal cavity 4 of the hollow tubular body 2 via the second hole 24. Alternatively, insulation may be preloaded in the cavity 4 of the hollow body 2 prior to installation. Thus, after the hollow tubular body 2 has been anchored in the blind hole, an insulating material may be injected into the cavity 4 before the plug 6 is fitted.

It will be appreciated that an insulation material (e.g. and expanding foam material) may be injected into the hollow cavity 4 via the hole 24 either before or after an object has been affixed to the plug.

A suitable insulating material for injection into the cavity is expanding foam. A particularly suitable material is expanding polyurethane foam which may be applied through the nozzle of a canister.

The plurality of holes 12 in the sidewall of the hollow tubular body 2 allow the insulating material to pass from the internal cavity 4 through the sidewall to fill an annular void or cavity 13 between the outwardly facing surface 14 of the hollow tubular body 2 and the inwardly facing surface 15 which defines the drilled or bored hole in the insulating layer. This serves to insulate the fixing, reducing heat loss, and also to stabilise the anchor within the insulating layer 19.

The position of the fixing 1 within the insulating material is such that the end face of the first end of the hollow tubular body 2 bears against the substrate 9 and is urged into contact with the substrate by the first fixing element 10. The embedded hollow tubular body 2 is also supported by the layer of insulating material. This provides a stable fixing for a load capable of resisting a high bending moment applied by a heavy load. The dimensions of the fixing, particular the diameter and the length of the hollow tubular body can be selected in accordance with the load to be supported.

A number of fixings 1 may be used to provide a sufficient number of anchoring points on a structure for a given load. Alternatively, depending on the diameter of the hollow tubular body 2, one or more threaded holes or inserts 17 may be provided in the same plug 6 so as to allow more than one point of attachment between the load and the plug.

The skilled person will appreciate that a number of modifications to the fixing described above are possible. For example, the hollow tubular body 2 may have a square or rectangular section, the shape or dimensions of the hollow tubular body may vary along its length, the cylindrical shank portion 7 of the plug 6 may similarly have a different shape to that shown, for example a square or rectangular section and may be the same or a different shape relative to that of the hollow cylindrical member. A circular section fixing is best suited to a drilled or bored hole.

A washer 25 may optionally be provided (Figures, 3 and 4) which sits around the first fixing element 10 to spread the load under the fixing head, over the base of the first end portion 5. The washer may be positioned over the first fixing element 10 before it is advanced through the hollow tubular body 2. Alternatively, the washer 25 may held captive against the first end portion of the hollow tubular body 2 and the first fixing element 25 advanced through the hollow tubular body 2, the washer and the fixing hole 8.

The threaded hole or insert 17 in the plug 6 may be replaced with a nut plate affixed to the inner end of the cylindrical shank of the plug for receiving the second fixing element to affix an object to the plug.

The substantially closed first end 5 of the hollow tubular body 2 may instead be a substantially closed portion such as an internal web spaced from the first end at a different point along the length of the hollow tubular body and having a hole so that a first fixing element can be used to anchor the first end of the hollow tubular body 2 against the blind end of the blind hole. Alternatively an internal web having a hole may be provided in addition to a substantially closed first end to provide additional support for a first fixing means anchoring the hollow tubular body to the blind hole.

The fixing hole 8 in the substantially closed first end 5 and/or the internal web may be threaded or provided with a nut plate for additional engagement with the first fixing means which extends through the hole.

The hollow tubular body 2 may be provided with a captive screw for easy anchoring to the substrate.

In an alterative embodiment, the hollow tubular body could be composed of two separate components, - a substantially closed first end portion 5, and a cylindrical body or tube portion 3. This would allow the component to be made up in-situ by cutting the tube portion 3 to suit the length required and bonding it or otherwise securing it to end portion 5. The first end portion and the tube portion could also be threaded for engagement with one another.

In a further alternative embodiment, the first fixing element and the second fixing element may be a single, common fixing element for simultaneously securing the plug to the second end of the hollow tubular body and the first end portion of the hollow tubular body to the load bearing substrate.

In a further alternative embodiment, the hollow tubular body and/or the plug may be preformed with an adhesive or sealing compound to resemble a pre-soldered pipe joint. This enables the hollow tubular body and the plug portion to be attached to one another by the application of heat or another means for activating the adhesive.

## Claims

1. A fixing for affixing a load to a structure, comprising:
a hollow body capable of being fixed to a load bearing substrate of a structure by a first fixing element so that in use a first end of the hollow body is proximate the substrate, the hollow body having an open second end opposite to the first end; and
a plug for engagement with the second end of the hollow body and retainable in the second end of the hollow body by a retaining means, the plug having a first hole whereby a load is affixable to the plug by a second fixing element secured within the first hole;
**characterised in that** the hollow body includes therewithin an insulation material and/or the plug includes a second hole spaced from the first hole through which an insulation material may be injected.

2. A fixing according to Claim 1 wherein the hollow body is substantially closed at its first end or at a point between the first and second ends, the substantially closed portion having an fixing hole for attachment of the hollow body to the substrate by the first fixing element which in use passes through the fixing hole.

3. A fixing according to Claim 1 or Claim 2, wherein in the plug has a shank portion insertable into the open second end of the hollow body and the shank portion is retainable in the second end of the hollow body by the retaining means.

4. A fixing according to Claim 3 wherein the plug includes a flange projecting from the shank portion, the flange being dimensioned so that in use of the fixing, the flange is engageable with the exterior surface of the structure surrounding the hollow body.

5. A fixing according to Claim 4, wherein the plug includes a sealing element which in use is positioned between the flange and the exterior surface of the structure.

6. A fixing according to any preceding claim wherein at least a portion of the internal part of the hollow body is adapted to be filled with expanding foam injected through the second hole.

7. A fixing according to any preceding claim wherein the hollow body has at least one hole through its sidewall.

8. A fixing according to Claim 7, wherein the at least one hole through the sidewall of the hollow body permits the passage of insulating material from the internal part of the hollow body through the sidewall into a cavity between the hole in the structure and the external surface of the sidewall of the hollow body.

9. A fixing according to any preceding claim, wherein the retaining means is selected from an adhesive and a threaded coupling between the plug and the hollow body.

10. A fixing according to any preceding claim, wherein the hollow body is a circular section hollow tube.

11. A fixing according to any preceding claim wherein the hollow body includes a plurality of longitudinal reinforcing ribs.

12. A fixing according to any of Claims 1 to 9, wherein the hollow body is at least partially corrugated, the corrugations extending longitudinally.

13. A method of affixing a load to a structure including the steps of:
drilling or boring a blind hole into a structure;
inserting a hollow body into the blind hole until a first end of the hollow body is adjacent to a load bearing substrate of the structure;
affixing the first end of the hollow body to the substrate by a first fixing element;
inserting a plug having a shank portion into an open second end of the hollow body, the plug having a first hole and a second hole;
retaining the plug portion into the second end of the hollow body with a retaining means; and
affixing a load to the plug by a second fixing element secured within the first hole.

14. A method according to Claim 13, wherein the plug includes a flange projecting radially from a distal end thereof and the method includes the step of inserting a sealing element between the flange and the outer surface of the structure.

15. A method according to Claim 13 or Claim 14 including the step of injecting an insulating material into an internal portion of the hollow body via the second hole.
